# EUROPÄISCHE PATENTANMELDUNG

(11) **EP 4 386 185 A1**
(43) Veröffentlichungstag der Anmeldung: **19.06.2024**
(21) Anmeldenummer: 23208236.2
(22) Anmeldetag: 07.11.2023
(51) Int. Cl.: F01N 1/02, F01N 1/16, F01N 3/00, F02M 35/12, F16L 55/033, H01M 8/04, G10K 11/16

(54) **FLUIDLEITUNGSVORRICHTUNG MIT TEMPERATURABHÄNGIG FREIGEBBARER ÖFFNUNG**

(30) Priorität: 16.12.2022 DE 102022213811
(71) Anmelder: ContiTech Techno-Chemie GmbH, 61184 Karben (DE)
(72) Erfinder: Linzmaier, Markus, 30165 Hannover (DE); Flach, Axel, 30165 Hannover (DE); Sperling, Philipp, 30165 Hannover (DE)
(74) Vertreter: Continental Corporation

(57) **Zusammenfassung**

Die Erfindung betrifft eine Fluidleitungsvorrichtung, insbesondere zur Behandlung von Fluiden, mit einer von einer Wandung (20) begrenzten Kavität (10), durch die ein temperiertes Fluid (2) strömen kann, wobei die Wandung (20) eine Öffnung (21) aufweist, einer Verschlussvorrichtung (30) zum Verschließen der Öffnung (21), wobei die Verschlussvorrichtung (30) ein Verschlusselement (31) und eine Aktorvorrichtung (40) zur Bewegung des Verschlusselements (31) aufweist, wobei die Aktorvorrichtung (40) einen eine Formgedächtnislegierung enthaltenen Aktor (41) aufweist, der dazu ausgebildet ist, das Verschlusselement (31) in Abhängigkeit einer Temperatur des Fluids (2) zwischen einer verschlossenen Position und einer unverschlossenen Position zu bewegen.

## Beschreibung

Die vorliegende Erfindung betrifft eine Fluidleitungsvorrichtung mit den Merkmalen des Anspruchs 1.

Derartige Fluidleitungsvorrichtungen, die eine von einer Wandung begrenzte Kavität aufweisen, durch die ein temperiertes Fluid von einer Einlassöffnung der Fluidleitungsvorrichtung zu einer Auslassöffnung der Fluidleitungsvorrichtung strömen kann, können zum Beispiel zur Behandlung eines temperierten Fluids verwendet werden. Ist das Fluid etwa ein Abgas eines Brennstoffzellensystems, kann die Fluidleitungsvorrichtung beispielsweise ein Schalldämpfer sein, bei der die Behandlung eine Reduzierung eines Geräusches des Fluids ist, und/oder ein Wasserabscheider sein, bei der die Behandlung eine Entfeuchtung des Fluids ist. In diesen und in anderen Anwendungsfällen ist zusätzlich zu der Einlassöffnung und der Auslassöffnung in der die Kavität begrenzenden Wandung wenigstens eine Öffnung vorhanden, durch die das Fluid oder Bestandteile des Fluids (z.B. in Form von aus dem Fluid abgeschiedenen Wasser) hindurchströmen kann. Beispielsweise kann bei einem Schalldämpfer das Fluid durch die wenigstens eine Öffnung in eine Resonanzkammer strömen, in der die von dem Fluid entstammenden Schallwellen reflektiert werden, so dass die Schallwellen sich zumindest teilweise nach dem Interferenzprinzip gegenseitig auslöschen und auf diese Weise Geräusche des Fluids gedämpft werden. Ferner kann beispielweise bei einem Wasserabscheider das aus dem Fluid abgeschiedene Wasser durch die wenigstens eine Öffnung aus der Fluidleitungsvorrichtung abgelassen oder abgeführt werden.

Eine permanent offenstehende Öffnung in der Wandung kann allerdings je nach Anwendungsfall mit gewissen Nachteilen verbunden sein. Bei einem Schalldämpfer kann es aufgrund der permanent bestehenden fluidleitenden Verbindung zwischen der Kavität und der Resonanzkammer zu einem unerwünschten Druckverlust kommen. Bei einem Wasserabscheider kann durch eine insbesondere zur Umgebung hin permanent offene Abflussöffnung Schmutz oder Getier in den Wasserabscheider gelangen.

Aufgabe der vorliegenden Erfindung ist es daher, eine Fluidleitungsvorrichtung der eingangs genannten Art mit einem bedarfsgerecht steuerbaren Fluidpfad, insbesondere mit einer bedarfsgerecht freigebbaren Öffnung zu schaffen. Insbesondere soll eine als Schalldämpfer und/oder Wasserabscheider ausgebildete Fluidleitungsvorrichtung mit einer bedarfsgerecht freigebbaren Öffnung geschaffen werden.

Diese Aufgabe wird durch eine Fluidleitungsvorrichtung mit den Merkmalen des Anspruchs 1 gelöst. Bevorzugte Merkmale sind Gegenstand der abhängigen Ansprüche. Weitere Vorteile und Merkmale sind der allgemeinen Beschreibung sowie den Ausführungsbeispielen zu entnehmen.

Die erfindungsgemäße Fluidleitungsvorrichtung, insbesondere zur Behandlung von Fluiden, weist eine von einer Wandung begrenzten Kavität auf, durch die ein temperiertes Fluid von einer Einlassöffnung der Fluidleitungsvorrichtung zu einer Auslassöffnung der Fluidleitungsvorrichtung strömen kann. Die Wandung hat wenigstens eine Öffnung. Die Fluidleitungsvorrichtung hat eine Verschlussvorrichtung zum Verschließen der wenigstens einen Öffnung, wobei die Verschlussvorrichtung ein Verschlusselement und eine Aktorvorrichtung zur Bewegung des Verschlusselements aufweist. Die Aktorvorrichtung hat einen eine Formgedächtnislegierung enthaltenen Aktor, der dazu ausgebildet ist, das Verschlusselement in Abhängigkeit einer Temperatur des Fluids zwischen einer verschlossenen Position, in der die Öffnung durch das Verschlusselement verschlossen ist, und einer unverschlossenen Position, in der die Öffnung durch das Verschlusselement zumindest teilweise freigegeben ist, zu bewegen.

Der Erfindung liegt die Idee zugrunde, die sich mit der Aufnahme des Betriebs der Fluidleitungsvorrichtung einstellende Betriebstemperatur zur bedarfsgerechten Freigabe der Öffnung zu verwenden. Aufgrund des im Betrieb durch die Fluidleitungsvorrichtung strömenden temperierten Fluids stellt sich nach kurzer Zeit eine Betriebstemperatur ein, die wesentlich höher ist als eine Starttemperatur, bei der die Fluidleitungsvorrichtung zumindest eine gewisse Zeit nicht in Betrieb war. War die Fluidleitungsvorrichtung beispielsweise eine gewisse Zeit nicht in Betrieb, ist die Fluidleitungsvorrichtung auf Starttemperatur und das Verschlusselement befindet sich in der verschlossenen Position. Hierbei kann sich in einigen Anwendungsfällen bereits Fluid in der Kavität befinden, das ebenfalls auf Starttemperatur und somit nicht temperiert ist. Bei Aufnahme des Betriebs beginnt (allmählich) das temperierte Fluid durch die Kavität zu strömen, wobei es zwischen dem temperierten Fluid und dem Aktor zu einem Wärmeaustausch kommt. Der Aktor weist eine Formgedächtnislegierung auf. Formgedächtnislegierungen (englisch shape memory alloy, Abkürzung SMA) sind spezielle Metalllegierungen, die im kalten Zustand verformt werden können, aber bei Erwärmung in ihre vorverformte ("erinnerte") Form zurückkehren. Dieser Effekt basiert auf dem Vorhandensein einer Austenit genannten Hochtemperaturphase und einer Martensit genannten Niedertemperaturphase bei derartigen Legierungen. Durch die von dem Fluid aufgenommenen Wärme und dem daraus resultierenden Übergang der Formgedächtnislegierung in ihre Hochtemperaturphase verändert der Aktor seine Form (im Folgenden auch als "Aktivierung" des Aktors bezeichnet) und wirkt derart auf das Verschlusselement ein, dass sich das Verschlusselement bewegt und die Öffnung zumindest teilweise freigegeben wird. Auf diese Weise wird eine in einfacher Weise implementierbare Lösung für eine bedarfsgerecht freigebbare Öffnung geschaffen, bei der das Öffnen und das Schließen der Öffnung automatisch und insbesondere ohne Verwendung einer Steuerelektronik erfolgt.

Der Aktor kann ausgebildet sein, zur Bewegung des Verschlusselements von der verschlossenen Position in die unverschlossene Position eine Druckkraft oder eine Zugkraft auf das Verschlusselement auszuüben. Bevorzugt ist der Aktor ausgebildet, zur Bewegung des Verschlusselements von der verschlossenen Position in die unverschlossene Position eine Druckkraft auf das Verschlusselement auszuüben. Auf diese Weise kann eine einfachere Konstruktion realisiert werden, da auf eine Befestigung des Aktors an dem Verschlusselement verzichtet werden kann.

Mit dem Begriff "temperiertes Fluid" ist im Rahmen dieser Erfindung insbesondere ein Fluid gemeint, dessen Temperatur gegenüber einer Umgebungstemperatur zumindest derart abweicht, dass ein in der Aktivierung des Aktors resultierender Wärmeaustausch zwischen dem Aktor dem Fluid stattfindet, wenn das Fluid durch die Kavität der Fluidleitungsvorrichtung strömt. Das temperierte Fluid ist bevorzugt ein gegenüber einer Umgebungstemperatur erwärmtes Fluid. Beispielsweise kann das temperierte Fluid ein Abgas insbesondere eines Brennstoffzellensystems sein.

Vorzugsweise weist die Wandung einen rohrförmigen Abschnitt auf, der sich insbesondere entlang einer Längsmittelachse der Fluidleitungsvorrichtung erstreckt, und die freigebbare Öffnung ist eine Aussparung in dem rohrförmigen Abschnitt.

In einer bevorzugten Ausführungsform der erfindungsgemäßen Fluidleitungsvorrichtung ist der Aktor dazu ausgebildet ist, bei durch die Kavität strömendem Fluid Wärme von dem Fluid aufzunehmen und das Verschlusselement in Abhängigkeit der aufgenommenen Wärme zu bewegen, insbesondere wobei die Verschlussvorrichtung dazu ausgebildet ist, die Öffnung freizugeben, wenn der Aktor eine bestimmte Menge Wärme von dem Fluid aufgenommen hat. Auf diese Weise kann die Öffnung bedarfsgerecht freigegeben werden, sobald die Fluidleitungsvorrichtung eine bestimmte Betriebstemperatur erreicht hat.

In einer weiteren bevorzugten Ausführungsform der erfindungsgemäßen Fluidleitungsvorrichtung weist die Aktorvorrichtung ein Rückstellelement auf, das dazu ausgebildet ist, eine entgegen einer Wirkrichtung des Aktors gerichtete Rückstellkraft auf das Verschlusselement aufzubringen, wenn das Verschlusselement nicht in der verschlossenen Position ist. Die Wirkrichtung des Aktors ist dabei als jene Richtung definiert, in die der Aktor das Verschlusselement unter Freigabe der Öffnung bewegt, wenn der Aktor durch den Wärmeaustausch mit dem temperierten Fluid aktiviert wird. Das Rückstellelement ist ausgebildet, das Verschlusselement zurück in die verschlossene Position zu bewegen, wenn der Aktor sich z.B. nach einer Außerbetriebnahme der Fluidleitungsvorrichtung wieder abkühlt, d.h. die enthaltene Formgedächtnislegierung von ihrer Hochtemperaturphase in ihre Niedrigtemperaturphase wechselt. Bevorzugt stellt das Rückstellelement eine Rückstellkraft bereit, die im Wesentlichen proportional zu einer Bewegung des Verschlusselements in Wirkrichtung des Aktors und/oder einer Stauchung des Rückstellelements in Wirkrichtung des Aktors ansteigt. Das Rückstellelement ist insbesondere ein Federelement. Insbesondere ist das Verschlusselement zwischen dem Aktor und dem Rückstellelement angeordnet.

In einer weiteren bevorzugten Ausführungsform der erfindungsgemäßen Fluidleitungsvorrichtung ist die Formgedächtnislegierung eine Einweg-Effekt-Formgedächtnislegierung oder eine Zweiweg-Effekt-Formgedächtnislegierung. Der Einweg-Effekt ist durch eine einmalige Formänderung beim Aufheizen eines zuvor verformten Aktors gekennzeichnet. Das erneute Abkühlen bewirkt keine Formänderung, so dass der Aktor zum Schließen der Öffnung z.B. mit dem Rückstellelement verformt werden muss. Beim Zweiweg-Effekt führt ein erneutes Abkühlen doch zu einer entsprechenden Formänderung in die Form zurück, die vor dem Aufheizen vorhanden war. Der Vorteil der Verwendung einer Zweiweg-Effekt-Formgedächtnislegierung ist, dass der Aktor beim Abkühlen z.B. nach Außerbetriebnahme der Fluidleitungsvorrichtung von selbst in seine Ausgangsposition zurückkehrt und nicht von einem Rückstellelement in diese gebracht werden muss. Ein gegebenenfalls für das Verschlusselement vorgesehene Rückstellelement kann daher kompakter ausgestaltet werden.

In einer weiteren bevorzugten Ausführungsform der erfindungsgemäßen Fluidleitungsvorrichtung ist der Aktor und/oder das Verschlusselement außerhalb der Kavität, insbesondere auf einer der Kavität abgewandten Außenseite der Wandung, angeordnet. Auf diese Weise bilden der Aktor und/oder das Verschlusselement kein Strömungshindernis für das durch die Kavität strömende Fluid, was sich positiv auf die Strömungseigenschaften der Fluidleitungsvorrichtung auswirkt. Eine Anordnung des Aktors und/oder des Verschlusselements auf der der Kavität abgewandten Außenseite der Wandung begünstigt gleichsam einen Wärmeaustausch zwischen dem temperierten Fluid und den Teilen der Verschlussvorrichtung. Bevorzugt weist die Kavität zumindest in einem Längsabschnitt der Fluidleitungsvorrichtung, in dem die Verschlussvorrichtung angeordnet ist einen gleichbleibenden Strömungsquerschnitt auf. Insbesondere ist das Rückstellelement außerhalb der Kavität, vorzugsweise auf der der Kavität abgewandten Außenseite der Wandung, angeordnet. Besonders bevorzugt sind der Aktor, das Verschlusselement und das ggf. vorhandene Rückstellelement nicht aneinander befestigt, wodurch der konstruktive Aufbau der Fluidleitungsvorrichtung erheblich vereinfacht wird.

In einer weiteren bevorzugten Ausführungsform der erfindungsgemäßen Fluidleitungsvorrichtung hat die Wandung einen rohrförmigen Abschnitt, der sich insbesondere entlang einer Längsmittelachse der Fluidleitungsvorrichtung erstreckt, wobei das Verschlusselement in Längsrichtung des rohrförmigen Abschnitts verschieblich ist. Auf diese Weise kann ein kompakter und an die Geometrie der Fluidleitungsvorrichtung angepasster Steuermechanismus realisiert werden, der besonders in radialer Richtung wenig Bauraum einnimmt.

In einer weiteren bevorzugten Ausführungsform der erfindungsgemäßen Fluidleitungsvorrichtung ist der Aktor wendelförmig ausgebildet. Mit anderen Worten hat der Aktor eine Form wie eine Schraubenfeder. Auf diese Weise bildet der Aktor zum einen eine große Wechselwirkungsfläche für den Wärmeaustausch mit dem Fluid aus. Zum anderen kann der so geformte Aktor eine ausreichende Kraft auf das Verschlusselement aufbringen, selbst wenn auf dieses eine Rückstellkraft des Rückstellelements wirkt. Ferner kann der wendelförmige Aktor in einfacher Weise z.B. auf dem rohrförmigen Abschnitt der Wandung angeordnet werden, wobei der Aktor in Längsrichtung verformbar ist, jedoch in radialer Richtung unverlierbar gelagert ist. Bevorzugt ist der wendelförmige Aktor auf dem rohrförmigen Abschnitt der Wandung angeordnet. Insbesondere ist der wendelförmige Aktor sich um den rohrförmigen Abschnitt herum erstreckend ausgebildet.

Vorzugsweise ist das Rückstellelement wendelförmig und als Schraubenfeder ausgebildet. Auf diese Weise wird das Rückstellelement in einfacher Weise gelagert, wobei das Rückstellelement in Längsrichtung verformbar ist, jedoch in radialer Richtung unverlierbar gelagert ist. Bevorzugt ist das wendelförmige Rückstellelement auf dem rohrförmigen Abschnitt der Wandung angeordnet und insbesondere sich um den rohrförmigen Abschnitt herum erstreckend ausgebildet.

In einer weiteren bevorzugten Ausführungsform der erfindungsgemäßen Fluidleitungsvorrichtung ist das Verschlusselement ausgebildet, die Wandung unverlierbar zu umgreifen. Auf diese Weise wird das Verschlusselement in einfacher Weise gelagert, wobei das Verschlusselement in Längsrichtung verschiebbar ist, jedoch in radialer Richtung unverlierbar gelagert ist. Vorzugsweise weist das Verschlusselement einen hülsenförmigen Körper auf, der sich um die von der Wandung begrenzte Kavität herum erstreckt.

In einer weiteren bevorzugten Ausführungsform der erfindungsgemäßen Fluidleitungsvorrichtung ist die Fluidleitungsvorrichtung ein Schalldämpfer zur Reduzierung eines Geräusches des Fluids, insbesondere eines Abgases eines Brennstoffzellensystems, und weist eine insbesondere geschlossene Resonanzkammer auf, die mit der Kavität in fluidleitender Verbindung steht, wenn sich das Verschlusselement in der unverschlossenen Position befindet. Auf diese Weise wird ein Schalldämpfer mit einer bedarfsgerecht freigebbaren Öffnung zur Resonanzkammer geschaffen.

In einer weiteren bevorzugten Ausführungsform der erfindungsgemäßen Fluidleitungsvorrichtung hat die Fluidleitungsvorrichtung eine die Resonanzkammer in zumindest zwei Teilkammern trennenden Trennwand, die an dem Verschlusselement befestigt ist. Hierbei steht im Wesentlichen nur eine der Teilkammern der Resonanzkammer in fluidleitender Verbindung mit der Kavität, wobei das jeweilige Volumen der Teilkammern von der Position des Verschlusselements abhängt, die wiederum von dem temperaturabhängigen Stellweg des Aktors abhängt. Auf diese Weise kann das Volumen der mit der Kavität in fluidleitender Verbindung stehenden Teilkammer der Resonanzkammer in Abhängigkeit der Temperatur des Fluids gesteuert werden. Der Schalldämpfer kann dabei derart ausgebildet sein, dass bei einer ersten Betriebstemperatur ein erstes Volumen der Teilkammer der Resonanzkammer bereitgestellt wird und bei einer zweiten Betriebstemperatur ein zweites Volumen der Teilkammer der Resonanzkammer bereitgestellt wird, wobei das jeweilige Volumen für die Dämpfung der bei der jeweiligen Betriebstemperatur dominanten Schallfrequenzen ausgelegt ist.

In einer weiteren bevorzugten Ausführungsform der erfindungsgemäßen Fluidleitungsvorrichtung ist die Fluidleitungsvorrichtung ein Wasserabscheider zur Abtrennung von Wasser aus dem Fluid, insbesondere aus dem Abgasstrom eines Brennstoffzellensystems, ist und die Öffnung eine Abführöffnung für innerhalb der Fluidleitungsvorrichtung abgeschiedenes Wasser ist, über die aufgefangenes Wasser aus der Fluidleitungsvorrichtung, insbesondere gravitationsbedingt selbstständig, bevorzugt in Umwelt, abgeführt werden kann. Auf diese Weise wird ein Wasserabscheider mit einer bedarfsgerecht freigebbaren Abführöffnung geschaffen. Die Abführöffnung kann dabei in den Zeiten, in denen der Wasserabscheider nicht in Betrieb ist, automatisch geschlossen werden, so dass ein Eindringen von Schmutz oder Getier verhindert wird.

In einer weiteren bevorzugten Ausführungsform der erfindungsgemäßen Fluidleitungsvorrichtung ist die Fluidleitungsvorrichtung ausgebildet, die Öffnung ab einer Betriebstemperatur von 40 °C bis 60 °C, bevorzugt ab einer Betriebstemperatur von 50 °C, zu öffnen.

Es wird ausdrücklich darauf hingewiesen, dass die vorstehend erläuterten Ausgestaltungen der Erfindung jeweils für sich oder in einer beliebigen technisch sinnvollen Kombination auch untereinander jeweils mit dem Gegenstand der unabhängigen Ansprüche kombinierbar sind.

Abwandlungen und Ausgestaltungen der Erfindung sowie weitere Vorteile und Einzelheiten der Erfindung lassen sich der nachfolgenden gegenständlichen Beschreibung und den Zeichnungen entnehmen. In den schematischen Figuren zeigen:
- Fig. 1: eine Schnittdarstellung eines ersten Ausführungsbeispiels einer erfindungsgemäßen Fluidleitungsvorrichtung in verschlossener Position;
- Fig. 2: das erste Ausführungsbeispiel aus Fig. 2 in unverschlossener Position;
- Fig. 3: eine Schnittdarstellung eines zweiten Ausführungsbeispiels einer erfindungsgemäßen Fluidleitungsvorrichtung in verschlossener Position; und
- Fig. 4: das zweite Ausführungsbeispiel aus Fig. 3 in unverschlossener Position.

Gleich oder ähnlich wirkende Teile sind - sofern dienlich - mit identischen Bezugsziffern versehen.

Einzelne technische Merkmale der nachbeschriebenen Ausführungsbeispiele können auch in Kombination mit vorbeschriebenen Ausführungsbeispielen sowie den Merkmalen der unabhängigen Ansprüche und etwaiger weiterer Ansprüche zu erfindungsgemäßen Gegenständen kombiniert werden.

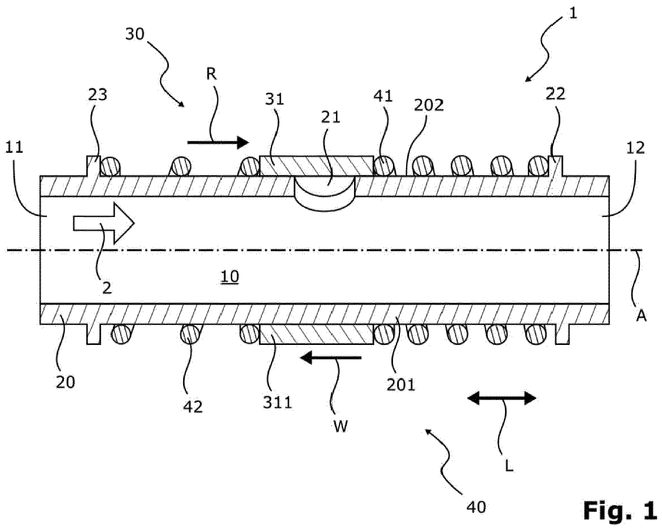

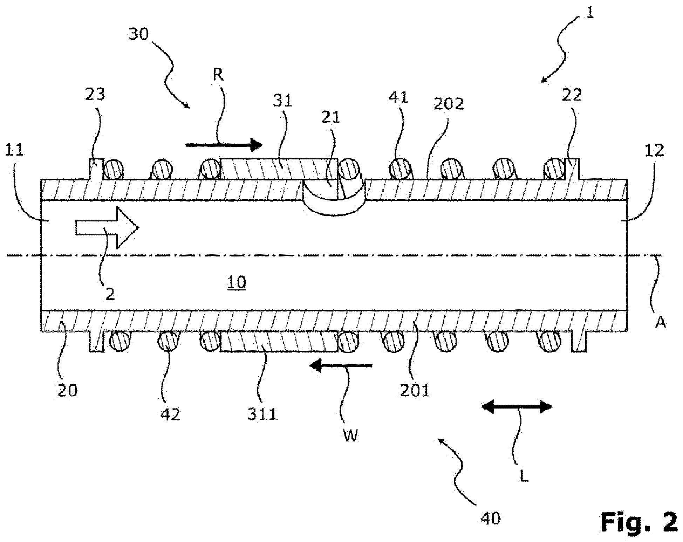

Figuren 1 und 2 zeigen ein erstes Ausführungsbeispiel einer erfindungsgemäßen Fluidleitungsvorrichtung 1 mit einer von einer Wandung 20 begrenzten Kavität 10, durch die ein temperiertes Fluid 2 von einer Einlassöffnung 11 zu einer Auslassöffnung 12 strömen kann. Die Wandung 20 weist einen sich entlang einer Längsmittelachse A erstreckenden rohrförmigen Abschnitt 201 auf, in dem eine Öffnung 21 ausgebildet ist. Die Fluidleitungsvorrichtung weist ferner eine Verschlussvorrichtung 30 zum Verschließen der Öffnung 21 auf, wobei die Verschlussvorrichtung 30 ein Verschlusselement 31 und eine Aktorvorrichtung 40 zur Bewegung des Verschlusselements 31 aufweist. Die Aktorvorrichtung 40 weist einen eine Formgedächtnislegierung enthaltenen Aktor 41 auf, der dazu ausgebildet ist, das Verschlusselement 31 in Abhängigkeit einer Temperatur des Fluids 2 zwischen einer verschlossenen Position (Fig. 1), in der die Öffnung 21 durch das Verschlusselement 31 verschlossen ist, und einer unverschlossenen Position (Fig. 2), in der die Öffnung 21 durch das Verschlusselement 31 teilweise freigegeben ist, zu bewegen.

Der Aktor 41 ist dazu ausgebildet ist, bei durch die Kavität 10 strömendem Fluid 2 Wärme von dem Fluid 2 aufzunehmen und das Verschlusselement 31 in Abhängigkeit der aufgenommenen Wärme zu bewegen, wobei die Verschlussvorrichtung 30 dazu ausgebildet ist, die Öffnung 21 freizugeben (Fig. 2), wenn der Aktor 41 eine bestimmte Menge Wärme von dem Fluid 2 aufgenommen hat.

Das Verschlusselement 31 weist einen hülsenförmigen Körper 311 auf, der sich um die von der Wandung 20 begrenzte Kavität 10 herum erstreckt und die Wandung 20 unverlierbar umgreift. Das Verschlusselement 31 ist somit in Längsrichtung L des rohrförmigen Abschnitts 201 verschieblich.

Die Aktorvorrichtung 40 weist zudem ein Rückstellelement 42 in Form einer Schraubenfeder auf, das dazu ausgebildet ist, eine entgegen einer Wirkrichtung W des Aktors 41 gerichtete Rückstellkraft R auf das Verschlusselement 31 aufzubringen, wenn das Verschlusselement 31 nicht in der verschlossenen Position ist.

Fig. 1 zeigt die Fluidleitungsvorrichtung 1 außer Betrieb. Es strömt kein temperiertes Fluid 2 durch die Fluidleitungsvorrichtung 1. Daher herrscht innerhalb der Fluidleitungsvorrichtung 1 eine Starttemperatur. Die Formgedächtnislegierung des Aktors 41 befindet sich in ihrer Niedrigtemperaturphase, d.h. der Aktor 41 ist nicht aktiviert. Das Verschlusselement 31 befindet sich in der verschlossenen Position.

Fig. 2 zeigt die Fluidleitungsvorrichtung 1 im Betrieb. Temperiertes Fluid 2 strömt dabei bereits eine gewisse Zeit durch die Fluidleitungsvorrichtung 1, weshalb in der Fluidleitungsvorrichtung eine Betriebstemperatur herrscht, die wesentlich höher ist als die Starttemperatur. Das temperierte Fluid 2 erwärmt u.a. den Teil der Wandung 20, auf dem der Aktor 41 gelagert ist, wobei die Wandung 20 diese Wärme dann an den Aktor 41 weitergibt. Der Aktor 41 wechselt von seiner Niedrigtemperaturphase in seine Hochtemperaturphase und dehnt sich in Längsrichtung L aus. Da der Aktor 41 an dem auslassseitigen Abstützelement 22 abgestützt ist, übt der sich ausdehnende Aktor 41 eine Druckkraft in Wirkrichtung W auf das Verschlusselement 31 aus, wodurch das Verschlusselement 31 verschoben und die Öffnung teilweise freigegeben wird. Das an dem einlassseitigen Abstützelement 23 abgestützte Rückstellelement 42 wird durch die Bewegung des Verschlusselements 31 gestaucht, wodurch das Rückstellelement 42 eine entgegen einer Wirkrichtung W des Aktors 41 gerichtete Rückstellkraft R auf das Verschlusselement 31 aufbringt, die mit größer werdender Auslenkung des Verschlusselements 31 in Wirkrichtung W ansteigt bis sich Rückstellkraft R und Druckkraft des Aktors 41 ausgleichen und das Verschlusselement 31 in der unverschlossenen Position ruht.

Wird der Betrieb der Fluidleitungsvorrichtung 1 wiederum eingestellt, so fließt kein temperiertes Fluid 2 mehr durch die Fluidleitungsvorrichtung 1, sodass diese allmählich von der Betriebstemperatur zurück auf die Starttemperatur abkühlt. Der Aktor 41 geht von seiner Hochtemperaturphase in seine Niedrigtemperaturphase über, wodurch die von dem Aktor 41 auf das Verschlusselement 31 ausgeübte Druckkraft wegfällt. Das Rückstellelement 42 schiebt das Verschlusselement 31 zurück in die verschlossene Position.

Die in dem Aktor 41 enthaltene Formgedächtnislegierung kann eine Einweg-Effekt-Formgedächtnislegierung oder eine Zweiweg-Effekt-Formgedächtnislegierung sein. Bei einer Einweg-Effekt-Formgedächtnislegierung schiebt das Rückstellelement 42 den Aktor 41 zurück in seine in Fig. 1 gezeigte Ausgangform. Bei einer Zweiweg-Effekt-Formgedächtnislegierung geht der Aktor 41 beim Abkühlen selbst in seine Ausgangsform zurück.

Das einlassseitige Abstützelement 23 und/oder das auslassseitige Abstützelement 22 kann in Umfangsrichtung mehrere Vorsprünge aufweisen oder als umlaufender Absatz ausgebildet sein. Die Abstützelemente 22, 23 können auch von einer Wandung ausgebildet sein.

Der Aktor 41 ist nach Art einer Schraubenfeder wendeiförmig ausgebildet, wodurch der Aktor 41 eine große Wechselwirkungsfläche für den Wärmeaustausch mit dem Fluid 2 ausbildet, eine ausreichende Kraft auf das Verschlusselement 31 aufbringen und in einfacher Weise auf dem rohrförmigen Abschnitt 201 gelagert werden kann.

Der Aktor 41, das Rückstellelement 42 und das dazwischen angeordnete Verschlusselement 31 sind außerhalb der Kavität 10 auf einer der Kavität 10 abgewandten Außenseite 202 der Wandung 20 angeordnet, ohne aneinander befestigt zu sein. Auf diese Weise stellen diese Bauteile kein Strömungshindernis für das durch die Kavität 10 strömende Fluid 2 dar. Gleichzeitig wird ein besonders einfacher Aufbau der Fluidleitungsvorrichtung erreichen.

Die Fluidleitungsvorrichtung 1 des ersten Ausführungsbeispiels kann ein Wasserabscheider zur Abtrennung von Wasser aus dem Fluid 2 sein. Das Fluid 2 kann hierbei ein Abgasstrom eines Brennstoffzellensystems sein. Die Öffnung 21 kann eine Abführöffnung für innerhalb der Fluidleitungsvorrichtung 1 abgeschiedenes Wasser sein, über die aufgefangenes Wasser aus der Fluidleitungsvorrichtung 1, insbesondere gravitationsbedingt selbstständig, abführbar ist.

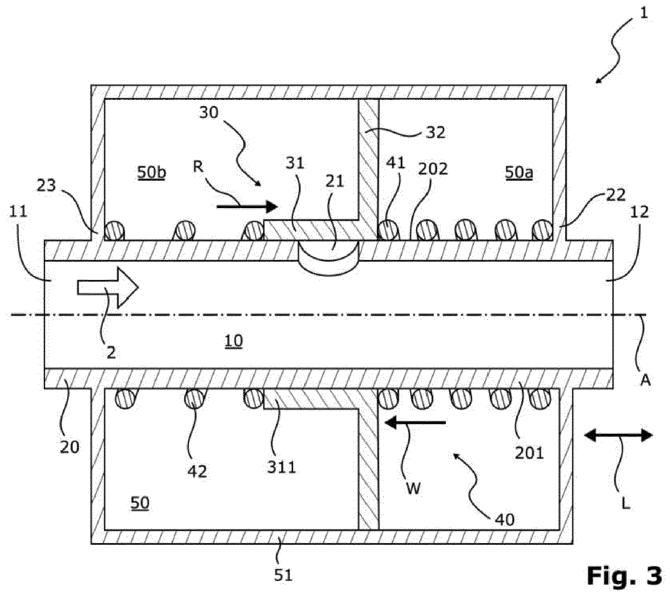

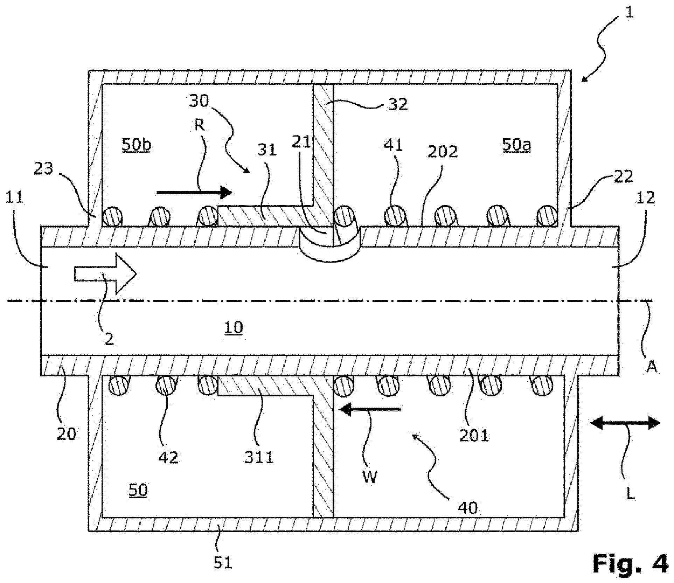

Figuren 3 und 4 zeigen ein zweites Ausführungsbeispiel einer erfindungsgemäßen Fluidleitungsvorrichtung 1. Das zweite Ausführungsbeispiel funktioniert analog zum ersten Ausführungsbeispiel, wobei die Fluidleitungsvorrichtung 1 des zweiten Ausführungsbeispiels überdies eine durch eine weitere Wandung 51 begrenzte Kammer 50 aufweist, die mit der Kavität 10 in fluidleitender Verbindung steht, wenn sich das Verschlusselement 31 in der unverschlossenen Position befindet. Zudem ist an dem Verschlusselement eine die Kammer 50 in zumindest zwei Teilkammern 50a, 50b trennende Trennwand 32 befestigt. Somit steht im Wesentlichen die Teilkammer 50a in fluidleitender Verbindung mit der Kavität 10, wenn sich das Verschlusselement 31 in der unverschlossenen Position befindet, wobei das jeweilige Volumen der Teilkammern 50a, 50b von der Position des Verschlusselements 31 abhängt, die wiederum von dem temperaturabhängigen Stellweg des Aktors 41 abhängt. Auf diese Weise kann das Volumen der mit der Kavität 10 in fluidleitender Verbindung stehenden Teilkammer 50a in Abhängigkeit der Temperatur des Fluids 2 gesteuert werden.

Die Fluidleitungsvorrichtung 1 des zweiten Ausführungsbeispiels kann ein Schalldämpfer zur Reduzierung eines Geräusches des Fluids 2 sein. Das Fluid 2 kann ein Abgas eines Brennstoffzellensystems sein. Die Kammer 50 kann eine Resonanzkammer des Schalldämpfers sein. Der Schalldämpfer kann dabei derart ausgebildet sein, dass bei einer ersten Betriebstemperatur ein erstes Volumen der Teilkammer 50a bereitgestellt wird und bei einer zweiten Betriebstemperatur ein zweites Volumen der Teilkammer 50a bereitgestellt wird, wobei das jeweilige Volumen für die Dämpfung der bei der jeweiligen Betriebstemperatur dominanten Schallfrequenzen ausgelegt ist.

Ergänzend sei darauf hingewiesen, dass "aufweisend" keine anderen Elemente oder Schritte ausschließt und "ein" oder "eine" keine Vielzahl ausschließt.

Der Schutzbereich der vorliegenden Erfindung ist durch die Patentansprüche gegeben und wird durch die in der Beschreibung erläuterten oder den Figuren gezeigten Merkmale nicht beschränkt.

### Bezugszeichenliste (Teil der Beschreibung)

- 1: Fluidleitungsvorrichtung
- 2: temperiertes Fluid
- 10: Kavität
- 11: Einlassöffnung
- 12: Auslassöffnung
- 20: Wandung
- 201: rohrförmiger Abschnitt der Wandung
- 202: Außenseite der Wandung
- 21: verschließbare bzw. freigebbare Öffnung
- 22: einlassseitiges Abstützelement
- 23: auslassseitiges Abstützelement
- 30: Verschlussvorrichtung
- 31: Verschlusselement
- 311: hülsenförmiger Körper
- 32: Trennwand
- 40: Aktorvorrichtung
- 41: Aktor
- 42: Rückstellelement
- 50: Kammer, Resonanzkammer
- 51: weitere Wandung

- A: Längsmittelachse der Fluidleitungsvorrichtung
- L: Längsrichtung des rohrförmigen Abschnitts
- R: Rückstellkraft des Rückstellelements
- W: Wirkrichtung des Aktors

## Patentansprüche

1. Fluidleitungsvorrichtung (1), insbesondere zur Behandlung von Fluiden, mit
einer von einer Wandung (20) begrenzten Kavität (10), durch die ein temperiertes Fluid (2) von einer Einlassöffnung (11) zu einer Auslassöffnung (12) strömen kann, wobei die Wandung (20) eine Öffnung (21) aufweist,
einer Verschlussvorrichtung (30) zum Verschließen der Öffnung (21), wobei die Verschlussvorrichtung (30) ein Verschlusselement (31) und eine Aktorvorrichtung (40) zur Bewegung des Verschlusselements (31) aufweist,
wobei die Aktorvorrichtung (40) einen eine Formgedächtnislegierung enthaltenen Aktor (41) aufweist, der dazu ausgebildet ist, das Verschlusselement (31) in Abhängigkeit einer Temperatur des Fluids (2) zwischen einer verschlossenen Position, in der die Öffnung (21) durch das Verschlusselement (31) verschlossen ist, und einer unverschlossenen Position, in der die Öffnung (21) durch das Verschlusselement (31) zumindest teilweise freigegeben ist, zu bewegen.

2. Fluidleitungsvorrichtung (1) nach Anspruch 1, wobei der Aktor (41) dazu ausgebildet ist, bei durch die Kavität (10) strömendem Fluid (2) Wärme von dem Fluid (2) aufzunehmen und das Verschlusselement (31) in Abhängigkeit der aufgenommenen Wärme zu bewegen, insbesondere wobei die Verschlussvorrichtung (30) dazu ausgebildet ist, die Öffnung (21) freizugeben, wenn der Aktor (41) eine bestimmte Menge Wärme von dem Fluid (2) aufgenommen hat.

3. Fluidleitungsvorrichtung (1) nach Anspruch 1 oder 2, wobei die Aktorvorrichtung (40) ein Rückstellelement (42) aufweist, das dazu ausgebildet ist, eine entgegen einer Wirkrichtung (W) des Aktors (41) gerichtete Rückstellkraft (R) auf das Verschlusselement (31) aufzubringen, wenn das Verschlusselement (31) nicht in der verschlossenen Position ist.

4. Fluidleitungsvorrichtung (1) nach einem der vorangehenden Ansprüche, wobei die Formgedächtnislegierung eine Einweg-Effekt-Formgedächtnislegierung oder eine Zweiweg-Effekt-Formgedächtnislegierung ist.

5. Fluidleitungsvorrichtung (1) nach einem der vorangehenden Ansprüche, wobei der Aktor (41) und/oder das Verschlusselement (31) außerhalb der Kavität (10), insbesondere auf einer der Kavität (10) abgewandten Außenseite (202) der Wandung (20), angeordnet ist.

6. Fluidleitungsvorrichtung (1) nach einem der vorangehenden Ansprüche, wobei die Wandung (20) einen rohrförmigen Abschnitt (201) aufweist, wobei das Verschlusselement (31) in Längsrichtung (L) des rohrförmigen Abschnitts (201) verschieblich ist.

7. Fluidleitungsvorrichtung (1) nach einem der vorangehenden Ansprüche, wobei der Aktor (41) wendelförmig ausgebildet ist.

8. Fluidleitungsvorrichtung (1) nach einem der vorangehenden Ansprüche, wobei das Verschlusselement (31) ausgebildet ist, die Wandung (10) unverlierbar zu umgreifen.

9. Fluidleitungsvorrichtung (1) nach Anspruch 8, wobei das Verschlusselement (31) einen hülsenförmigen Körper (311) aufweist, der sich um die von der Wandung (20) begrenzte Kavität (10) herum erstreckt.

10. Fluidleitungsvorrichtung (1) nach einem der vorangehenden Ansprüche, wobei die Fluidleitungsvorrichtung (1) ein Schalldämpfer zur Reduzierung eines Geräusches des Fluids (2), insbesondere eines Abgases eines Brennstoffzellensystems, ist und eine insbesondere geschlossene Resonanzkammer (50) aufweist, die mit der Kavität (10) in fluidleitender Verbindung steht, wenn sich das Verschlusselement (31) in der unverschlossenen Position befindet.

11. Fluidleitungsvorrichtung (1) nach Anspruch 10 mit einer die Resonanzkammer (50) in zumindest zwei Teilkammern (50a, 50b) trennenden Trennwand (32), die an dem Verschlusselement (31) befestigt ist.

12. Fluidleitungsvorrichtung (1) nach einem der Ansprüche 1 bis 9, wobei die Fluidleitungsvorrichtung (1) ein Wasserabscheider zur Abtrennung von Wasser aus dem Fluid (2), insbesondere aus dem Abgasstrom eines Brennstoffzellensystems, ist und die Öffnung (21) eine Abführöffnung für innerhalb der Fluidleitungsvorrichtung (1) abgeschiedenes Wasser ist, über die aufgefangenes Wasser aus der Fluidleitungsvorrichtung (1), insbesondere gravitationsbedingt selbstständig, bevorzugt in die Umwelt, abgeführt werden kann.
